# EUROPEAN PATENT APPLICATION

(11) **EP 4 502 423 A1**
(43) Date of publication of application: **05.02.2025**
(21) Application number: 23780849.8
(22) Date of filing: 30.03.2023
(51) Int. Cl.: F16H 25/22, F16H 25/24

(54) **BALL SCREW DEVICE**

(30) Priority: 31.03.2022 JP 2022058273
(71) Applicant: NSK Ltd., Tokyo 141-8560 (JP)
(72) Inventor: KAWAI, Ruito, Fujisawa-shi, Kanagawa 252-0811 (JP)
(74) Representative: SSM Sandmair
(86) International application number: PCT/JP2023/013125
(87) International publication number: WO 2023/190841

(57) **Abstract**

A ball screw device includes a nut, a screw shaft, and a ball. The nut includes a nut body that is provided with a plurality of recessed grooves on a first end surface arranged at any axial end portion of at least one of one axial end and the other axial end of a central axis, a plurality of first seal members that is fitted in respective ones of the plurality of recessed grooves, and one cap that covers the plurality of recessed grooves in the first end surface, is attached to an axial end portion, and closes a circumferential flow path in which a coolant circumferentially flows in a recessed groove communicating between end portions of two axial flow paths of the plurality of axial flow paths.

## Description

### Field

The present disclosure relates to a ball screw device.

### Background

A ball screw device includes, for example, a nut that is provided with an inner peripheral raceway groove, a screw shaft that passes the nut therethrough and is provided with an outer peripheral raceway groove, a plurality of balls that is arranged between the inner peripheral raceway groove and the outer peripheral raceway groove, and a coolant flow path that is provided inside the nut and through which a coolant flows (see Patent Literature 1). The coolant flow path includes an axial flow path that extends in an axial direction of the nut and a circumferential flow path that extends in a circumferential direction of the nut. The circumferential flow path is formed from a circumferential groove formed in an axial end portion of the nut to be opened to the axial outside, a seal member fitted in the circumferential groove to seal the circumferential groove, and a sealing member abutting on the seal member to seal the circumferential groove. A plurality of the circumferential grooves is provided, and a plurality of the seal members and a plurality of the sealing members corresponding to the respective circumferential grooves are also provided.

### Citation List

### Patent Literature

Patent Literature 1: JP 3217729 U

### Summary

### Technical Problem

In this way, in Patent Literature 1, the plurality of the sealing members corresponding to the plurality of the circumferential grooves is also provided. In the ball screw device provided with the coolant flow path, it is desired to reduce the number of components.

The present disclosure has been made in view of the above problem, and an object of the present disclosure is to provide a ball screw device provided with a coolant flow path and having a smaller number of components. Solution to Problem

To achieve the above object, a ball screw device according to an embodiment comprising: a nut that is provided with an inner peripheral raceway groove on an inner peripheral surface and includes a plurality of axial flow paths through which a coolant flows axially; a screw shaft that passes through the nut and is provided with an outer peripheral raceway groove on an outer peripheral surface; and a plurality of balls that is arranged between the inner peripheral raceway groove and the outer peripheral raceway groove, wherein the nut includes: a nut body that is provided with a plurality of recessed grooves on a first end surface arranged at an axial end portion of at least one of one axial end and the other axial end of a central axis; a plurality of first seal members that is fitted in respective ones of the plurality of recessed grooves; and one cap that covers the plurality of recessed grooves on the first end surface and is attached to the axial end portion, and closes a circumferential flow path in which the coolant circumferentially flows in a recessed groove communicating between end portions of two of the plurality of axial flow paths.

As described above, in the ball screw device according to Patent Literature 1, the plurality of the circumferential grooves is provided, and the plurality of the sealing members corresponding to the respective circumferential grooves is also provided. The plurality of the sealing members corresponds to the cap of the present disclosure.

Meanwhile, in the present disclosure, one cap covers the plurality of seal members and is attached to the nut. As described above, in Patent Literature 1, the plurality of the sealing members corresponding to the cap of the present disclosure is required, but in the present disclosure, only one cap is required, reducing the number of components, and further, the cost of the ball screw device and assembling man-hours.

As a desirable embodiment, each of the recessed grooves includes: a first groove that is a recess recessed from the first end surface toward an axial center side, and has an outer shape of the recess extending in a circumferential direction of the nut when viewed in an axial direction of the nut, and in which the first seal member is fitted; and a second groove that is provided inside the first groove as viewed in the axial direction of the nut, is recessed from a bottom portion of the first groove toward the axial center side, and from which the end portions of the two axial flow paths are exposed to the inside. Therefore, the seal member is configured to be fitted to the first groove, and the second groove is configured to constitute the circumferential flow path.

As a desirable embodiment, a deflector is provided at the axial end portion of at least one of the one axial end and the other axial end of the nut body, and the cap abuts on the deflector. In this way, the deflector abuts on the cap, and therefore, the cap allows the axial positioning of the deflector with higher accuracy.

As a desirable embodiment, a second end surface of the deflector near the cap is provided with a recess that is recessed toward an axial center side, and a second seal member that abuts on the cap is fitted in the recess. Therefore, as compared with a cap to which only the second seal member is attached and that is separately provided, in addition to a cap to which the first seal member is attached, according to the present disclosure, more seal members are allowed to be attached with one cap. Advantageous Effects of Invention

According to the present disclosure, it is possible to provide the ball screw device provided with the coolant flow path and having a smaller number of components.

### Brief Description of Drawings

FIG. 1 is an exploded perspective view of a ball screw device according to a first embodiment.
FIG. 2 is a cross-sectional view of the ball screw device according to the first embodiment.
FIG. 3 is a cross-sectional view taken along line III-III of FIG. 2.
FIG. 4 is a cross-sectional view taken along line IV-IV of FIG. 2.
FIG. 5 is a view of a state with a cap of FIG. 4 removed.
FIG. 6 is a cross-sectional view taken along line VI-VI of FIG. 3.
FIG. 7 is a cross-sectional view taken along line VII-VII of FIG. 3, with a seal member removed.
FIG. 8 is a schematic diagram illustrating a flow of a coolant in a coolant flow path in a nut.
FIG. 9 is a cross-sectional view of a ball screw device according to a second embodiment.
FIG. 10 is a cross-sectional view of a ball screw device according to a third embodiment.
FIG. 11 is a cross-sectional view taken along line XI-XI of FIG. 10, illustrating a state with a cap removed.
FIG. 12 is a cross-sectional view of a ball screw device according to a fourth embodiment.
FIG. 13 is an enlarged cross-sectional view of a part of FIG. 12.

### Description of Embodiments

Modes for carrying out the present invention (embodiments) will be described in detail with reference to the drawings. The present invention is not limited to the description of the following embodiments. Furthermore, elements described below include elements easily conceived by a person skilled in the art, and elements substantially identical to each other. In addition, the elements described below may be appropriately combined. Furthermore, portions having the same structures are denoted by the same reference numerals, and the description thereof will be omitted. Note that an X direction indicates an axial direction, and a Y direction and a Z direction indicate radial directions. The Y direction and the Z direction are orthogonal to (intersect) the X direction. The Y direction is orthogonal to (intersects) the Z direction. An X1 side indicates one side in the axial direction, and an X2 side indicates the other side in the axial direction. A Y1 side is opposite to a Y2 side, and a Z1 side is opposite to a Z2 side.

### [First Embodiment]

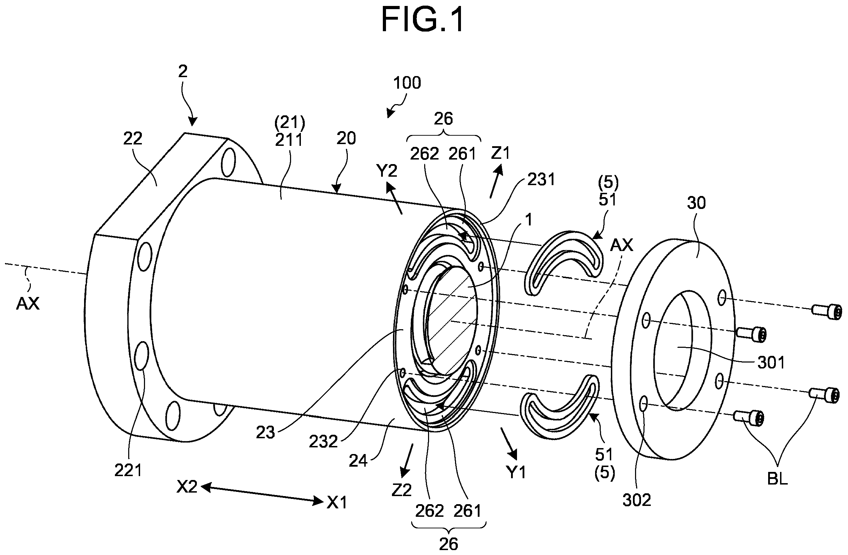

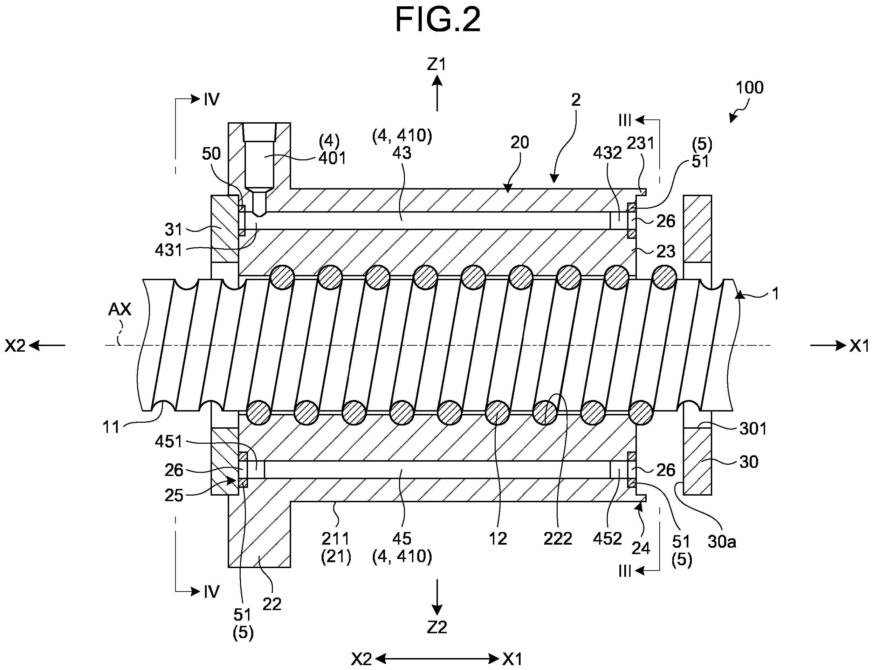

Hereinafter, a first embodiment will be described. FIG. 1 is an exploded perspective view of a ball screw device according to the first embodiment. FIG. 2 is a cross-sectional view of the ball screw device according to the first embodiment.

As illustrated in FIGS. 1 and 2, a ball screw device 100 according to the first embodiment includes a screw shaft 1, a nut 2, a plurality of balls 12, and a coolant flow path 4.

The screw shaft 1 extends in an X direction (axial direction) of a central axis AX. The screw shaft 1 has an outer periphery that is provided with an outer peripheral raceway groove 11. The outer peripheral raceway groove 11 extends helically.

The nut 2 includes a nut body 20, a seal member 5, and caps 30 and 31. The nut body 20 includes a cylindrical portion 21 and a flange portion 22.

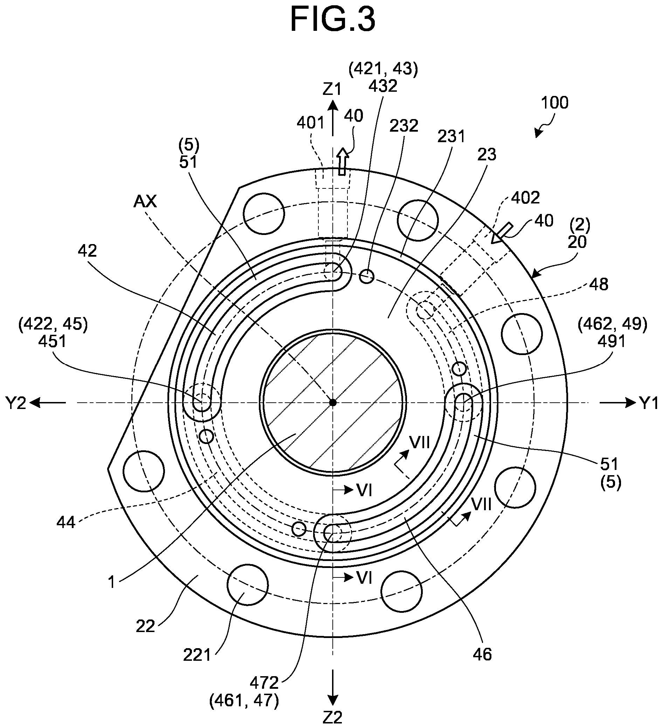

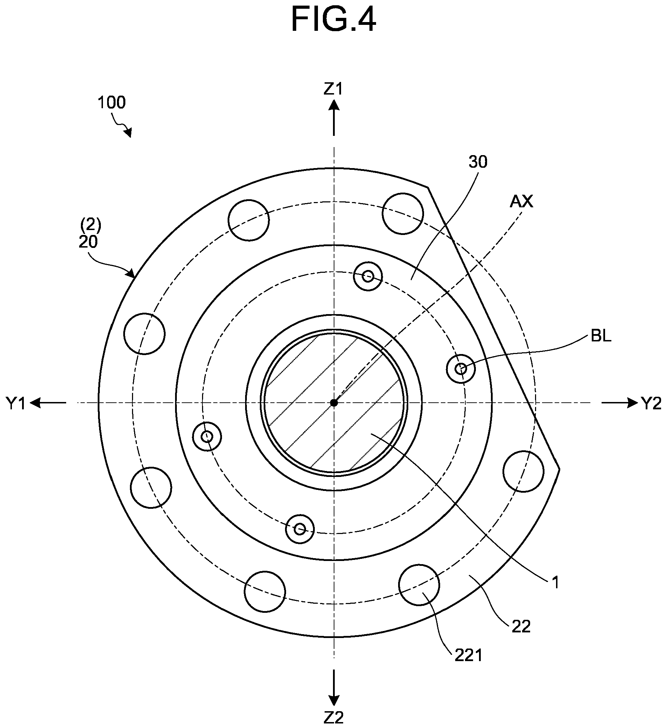

The cylindrical portion 21 extends in an X direction (axial direction) of the central axis AX. The cylindrical portion 21 has an inner peripheral surface that is provided with an inner peripheral raceway groove 222. The screw shaft 1 passes along the inner peripheral surface of the cylindrical portion 21. The inner peripheral raceway groove 222 extends helically. The plurality of balls 12 is arranged between the inner peripheral raceway groove 222 and the outer peripheral raceway groove 11. The cylindrical portion 21 has an outer periphery that is provided with a cylindrical surface 211. The cylindrical portion 21 and the cylindrical surface 211 extend in the circumferential direction around the central axis AX. The flange portion 22 is provided at an end portion of the nut body 20 on the X2 side (the other side in the axial direction). In other words, the flange portion 22 protrudes radially outward from the end portion of the nut body 20 on the X2 side (see FIGS. 3 and 4). The flange portion 22 is provided with a plurality of mounting holes 221 penetrating axially.

The nut 2 has an inside in which the coolant flow path 4 is formed. A coolant 40 flows in the coolant flow path 4. As illustrated in FIG. 2, the coolant flow path 4 includes, for example, an inlet 402 that is provided in the flange portion 22, a first axial flow path 43 and a second axial flow path 45 that is provided in the nut body 20. In addition, each of an end portion on the X1 side (one axial end 24) and the end portion on the X2 side (the other axial end 25) of the nut body 20 is provided with a first end surface 23. The first end surface 23 extends radially orthogonal to (intersecting) the axial direction. FIG. 1 illustrates the first end surface 23 provided at the one axial end 24. A recessed groove 26 and a tap hole 232 are formed in the first end surface 23. The seal member 5 is fitted to the recessed groove 26. Furthermore, the cap 30 is provided with a center hole 301 in a radial center and a plurality of bolt holes 302 in a circumferential direction. The cap 30 has an annular shape. A bolt BL passes through each of the bolt holes 302 of the cap 30 and is fastened to the tap hole 232. Therefore, the cap 30 covers the first end surface 23, is attached to the one axial end 24, and seals the recessed groove 26.

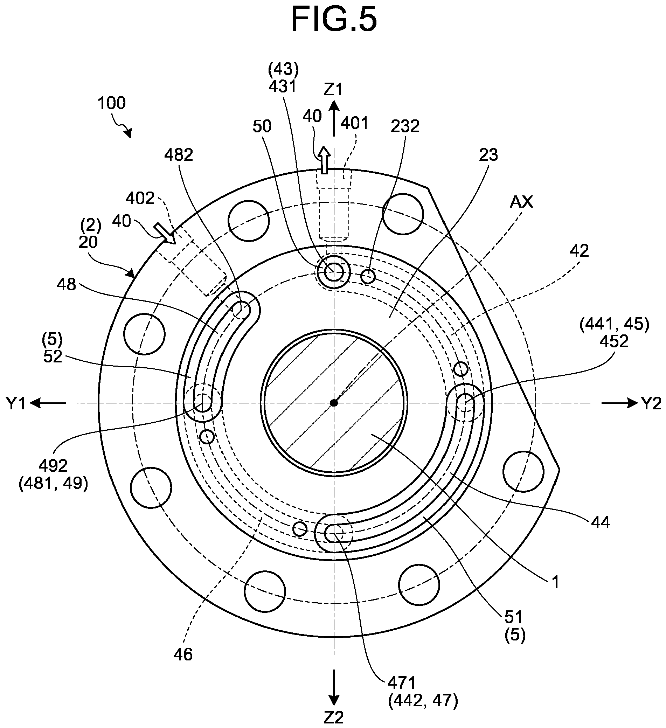

FIG. 3 is a cross-sectional view taken along line III-III of FIG. 2. FIG. 4 is a cross-sectional view taken along line IV-IV of FIG. 2. FIG. 5 is a view of a state with a cap of FIG. 4 removed.

As illustrated in FIGS. 3 and 5, an outlet 401 is provided on the Z1 side of the flange portion 22, and the inlet 402 is provided midway between the Z1 side and the Y1 side. The coolant 40 flows into the coolant flow path 4 from the inlet 402 and then flows out from the outlet 401.

As illustrated in FIG. 3, two seal members (first seal members) 51 are provided at the one axial end 24 of the nut body 20. Specifically, one seal member 51 extends in a circumferential direction, from the Z1 side to the Y2 side of the first end surface 23. The one seal member 51 overlaps a first circumferential flow path 42 when viewed in the axial direction. The first circumferential flow path 42 extends in a circumferential direction of the nut body 20. The first circumferential flow path 42 extends in a circumferential direction of the nut body 20, from a flow path end 421 to a flow path end 422.

The other seal member 51 extends in a circumferential direction, from the Y1 side to the Z2 side of the first end surface 23. The other seal member 51 overlaps a third circumferential flow path 46 when viewed in the axial direction. The third circumferential flow path 46 extends in a circumferential direction of the nut body 20, from a flow path end 461 to a flow path end 462.

As illustrated in FIG. 5, an O-ring (first seal member) 50, the seal member 51, and a seal member (first seal member) 52 are provided at the other axial end 25 of the nut body 20. Specifically, the O-ring 50 is provided at a flow path end 431 which is described later. The seal member 51 extends in a circumferential direction, from the Y2 side to the Z2 side of the first end surface 23. The seal member 51 overlaps a second circumferential flow path 44 when viewed in the axial direction. The second circumferential flow path 44 extends in a circumferential direction of the nut body 20, from a flow path end 441 to a flow path end 442. The seal member 52 extends in a circumferential direction, from an intermediate portion between the Z1 side and the Y1 side of the first end surface 23 to the Y1 side. The seal member 52 overlaps a fourth circumferential flow path 48 when viewed in the axial direction. The fourth circumferential flow path 48 extends in a circumferential direction of the nut body 20, from a flow path end 481 to a flow path end 482.

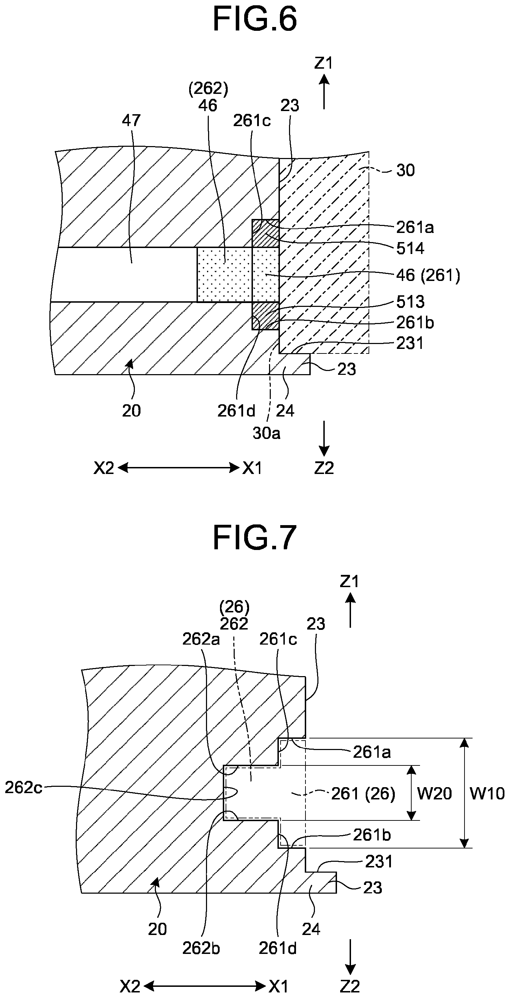

FIG. 6 is a cross-sectional view taken along line VI-VI of FIG. 3. FIG. 7 is a cross-sectional view taken along line VII-VII of FIG. 3, with a seal member removed.

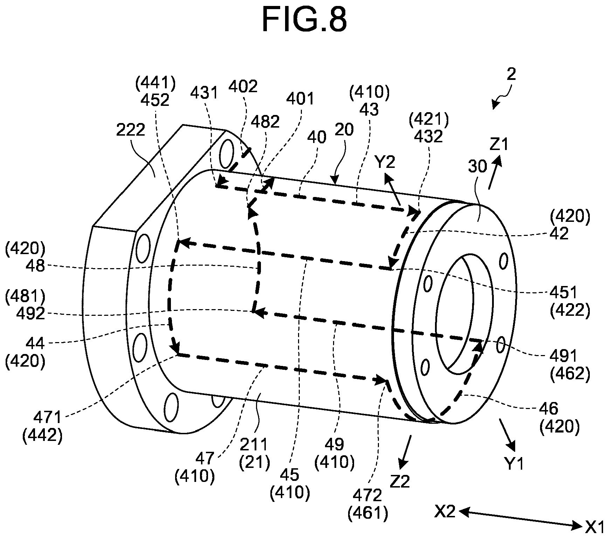

As illustrated in FIG. 8, the recessed groove 26 is provided at each of the one axial end (axial end portion) 24 and the other axial end (axial end portion) 25 of the nut body 20. Hereinafter, the recessed groove 26 provided at the one axial end 24 will be described, but the recessed groove 26 provided at the other axial end 25 has a similar configuration.

As illustrated in FIG. 7, the recessed grooves 26 include a first groove 261 and a second groove 262. As illustrated in FIG. 7, the first groove 261 is recessed from the first end surface 23 toward the X2 side (axial center side). The first groove 261 faces inner walls 261a and 261b and first bottom surfaces 261c and 261d. The inner walls 261a and 261b extend toward the X2 side orthogonally to (intersecting) the first end surface 23. The inner wall 261a and the inner wall 261b radially face each other. The first bottom surfaces 261c and 261d extend along the first end surface 23. Specifically, the first bottom surface 261c extends from an end of the inner wall 261a on the X2 side toward the Z2 side. The first bottom surface 261d extends from an end of the inner wall 261b on the X2 side toward the Z1 side. The first groove 261 has a radial width that is a width W10.

As illustrated in FIG. 7, the second groove 262 is recessed from the first bottom surfaces 261c and 261d toward the X2 side (axial center side). The second groove 262 communicates with the first groove 261. The second groove 262 faces inner walls 262a and 262b and a second bottom surface 262c. The inner walls 262a and 262b extend toward the X2 side orthogonally to (intersecting) the first end surface 23 The inner wall 262a and the inner wall 262b radially face each other. The second bottom surface 262c extends along the first end surface 23. The second bottom surface 262c connects an end of the inner wall 262a on the X2 side and an end of the inner wall 262b on the X2 side. Each of the first groove 261 and the second groove 262 has a rectangular cross-section as indicated by a two-dot-dash line. The second groove 262 has a radial width that is a width W20. The width W10 is larger than the width W20. Therefore, when the recessed groove 26 is viewed in the axial direction, the first bottom surfaces 261c and 261d are exposed.

As illustrated in FIG. 6, in the cross section of a portion overlapping a third axial flow path 47 when viewed in the axial direction, the first groove 261 and the second groove 262 communicate with the third axial flow path 47. In other words, as illustrated in FIGS. 6 and 7, the third circumferential flow path 46 is formed by the first groove 261 and the second groove 262. Note that the first circumferential flow path 42, the second circumferential flow path 44, and the fourth circumferential flow path 48, which are the other circumferential flow paths, are also formed by the first groove 261 and the second groove 262.

Here, the seal member 51 is fitted into the first groove 261. Specifically, the seal member 51 being abutting on the inner walls 261a and 261b, the first bottom surfaces 261c and 261d, and a back surface 30a of the cap 30 is accommodated in the first groove 261. Accordingly, the recessed groove 26 is sealed by the cap 30.

Next, a flow of the coolant will be described. FIG. 8 is a schematic diagram illustrating the flow of the coolant in a coolant flow path in a nut.

As illustrated in FIG. 8, axial flow paths 410 include the first axial flow path 43, the second axial flow path 45, the third axial flow path 47, and a fourth axial flow path 49. Circumferential flow paths 420 includes the first circumferential flow path 42, the second circumferential flow path 44, the third circumferential flow path 46, and the fourth circumferential flow path 48.

First, as illustrated in FIG. 8, the coolant 40 flows into the first axial flow path 43 from the inlet 402 via the flow path end 431. The first axial flow path 43 has the flow path end 431 and a flow path end 432. In other words, the coolant 40 flows from the flow path end 431 to the flow path end 432. Thereafter, the coolant 40 flows along the first circumferential flow path 42 from the flow path end 421 to the flow path end 422, and flows along the second axial flow path 45 from a flow path end 451 to a flow path end 452. Thereafter, the coolant 40 flows along the second circumferential flow path 44 from the flow path end 441 to the flow path end 442, flows along the third axial flow path 47 from a flow path end 471 to a flow path end 472, and flows along the third circumferential flow path 46 from the flow path end 461 to the flow path end 462. Then, the coolant 40 flows along the fourth axial flow path 49 from a flow path end 491 to a flow path end 492, flows along the fourth circumferential flow path 48 from the flow path end 481 to the flow path end 482, and then flows out of the nut 2 from the outlet 401. In this way, the coolant 40 alternately flows through the axial flow paths 410 and the circumferential flow paths 420 to uniformly cool the entire nut 2.

As described above, the ball screw device 100 according to the first embodiment includes the nut 2 that has the inner peripheral surface provided with the inner peripheral raceway groove 222 and that has the plurality of axial flow paths 410 through which the coolant 40 flows radially, the screw shaft 1 that passes through the nut 2 and that has the outer peripheral surface provided with the outer peripheral raceway groove 11, and the plurality of balls 12 that is arranged between the inner peripheral raceway groove 222 and the outer peripheral raceway groove 11. The nut 2 includes the nut body 20 that is provided with a plurality of the recessed grooves 26 on the first end surface 23 arranged at any axial end portion of at least one of the one axial end and the other axial end of the central axis AX, the seal members (the plurality of first seal members) 51 and 52 that are fitted in the plurality of recessed grooves 26, and one cap 30 or 31 that covers the plurality of recessed grooves 26 and the plurality of seal members 51 and 5 and the O-ring 50 in the first end surface 23, is attached to an axial end portion, and closes a circumferential flow path 420 in which the coolant 40 circumferentially flows in the recessed groove 26 communicating between end portions of two axial flow paths 410 of the plurality of axial flow paths 410.

As described above, in the ball screw device according to Patent Literature 1, the plurality of circumferential grooves is provided, and the plurality of seal members and sealing members corresponding to the respective circumferential grooves are also provided. The sealing members correspond to the caps 30 and 31 of the present embodiment.

Meanwhile, in the present embodiment, the one cap 30 or 31 covers the plurality of seal members 51 and 52 and the O-ring 50 and is attached to the nut body 20. As described above, in Patent Literature 1, the plurality of sealing members corresponding to the caps 30 and 31 of the present embodiment are required, but in the present embodiment, only one cap 30 or 31 is required, reducing the number of components, and further, the cost of the caps 30 and 31 and assembling man-hours.

In addition, the recessed grooves 26 include the first groove 261 and the second groove 262, in which the first groove 261 is a recess recessed from the first end surface 23 toward the axial center side, has an outer shape extending in a circumferential direction of the nut 2 when viewed in the axial direction of the nut 2, and the seal member 51 or 52 is fitted therein, and the second groove 262 is provided inside the first groove 261 when viewed in the axial direction of the nut 2, recessed from the bottom portion of the first groove 261 toward the axial center side, and end portions of two axial flow paths 410 are exposed inward therefrom.

Therefore, it is possible to configure the circumferential flow path 420 by the second groove 262, by fitting the seal member 51 or 52 in the first groove 261.

### [Second Embodiment]

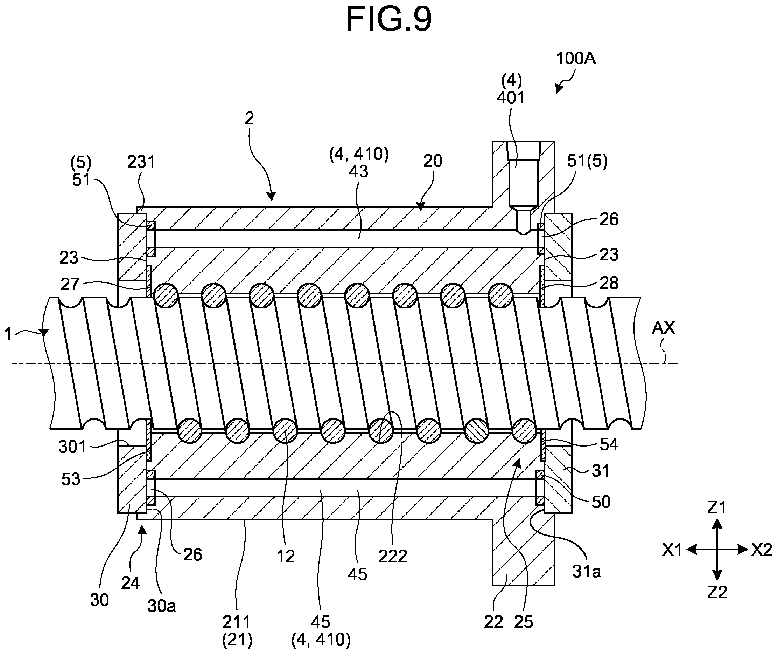

Hereinafter, a second embodiment will be described. FIG. 9 is a cross-sectional view of a ball screw device according to the second embodiment. In a ball screw device 100A according to the second embodiment, a seal member (first seal member) 53 and a seal member (first seal member) 54 are each provided on the first end surface 23. Details will be described below.

As illustrated in FIG. 9, each of the end portion on the X1 side (one axial end 24) and the end portion on the X2 side (the other axial end 25) of the nut body 20 is provided with the first end surface 23. The first end surface 23 on the X1 side is provided with a recess 27. The recess 27 is positioned radially inside from the recessed groove 26. The seal member 53 having an annular shape is accommodated in the recess 27. The seal member 53 has a thickness equal to or larger than the depth of the recess 27. The O-ring 50 (see FIG. 5), the seal member 51 (see FIG. 5), the seal member 52 (see FIG. 5), and the seal member 53 are covered by the cap 30. In other words, the cap 30 covers the O-ring 50, the seal member 51, the seal member 52, and the seal member 53, and is fastened to the one axial end 24 of the nut body 20 via a bolt which is not illustrated.

The first end surface 23 on the X2 side is provided with a recess 28. The recess 28 is positioned radially inside from the recessed groove 26. The seal member 54 having an annular shape is accommodated in the recess 28. The seal member 54 has a thickness equal to or larger than the depth of the recess 28. The O-ring 50 (see FIG. 5), the seal member 51 (see FIG. 5), the seal member 52 (see FIG. 5), and the seal member 54 are covered by the cap 31. In other words, the cap 31 covers the O-ring 50, the seal member 51, the seal member 52, and the seal member 54, and is fastened to the other axial end 25 of the nut body 20 via a bolt which is not illustrated.

As described above, in the second embodiment, in addition to the O-ring 50, the seal member 51, and the seal member 52, the seal members 53 and 54 are covered by the caps 30 and 31, and attached to the nut body 20. Therefore, the seal members 53 and 54 are also attached by the caps 30 and 31, respectively. Therefore, as compared with a configuration provided with a cap attaching only the seal member 53 and a cap attaching only the seal member 54, it is possible for the present embodiment to attach more seal members by using one cap 30 or 31.

### [Third Embodiment]

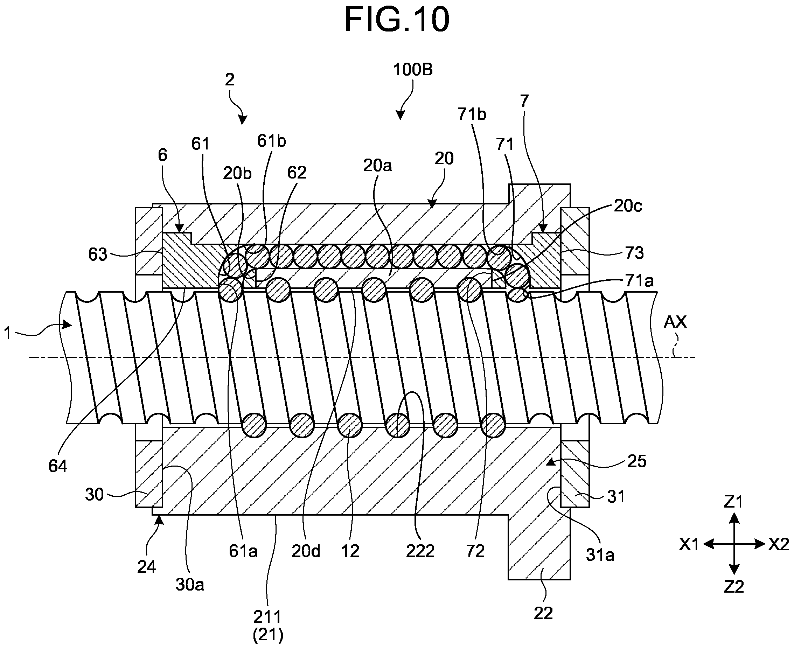

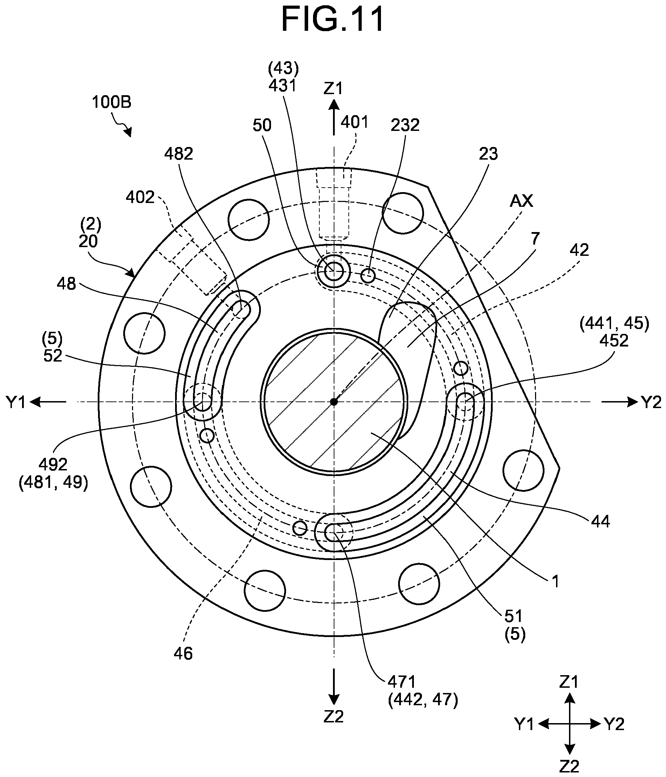

Hereinafter, a third embodiment will be described. FIG. 10 is a cross-sectional view of a ball screw device according to the third embodiment. FIG. 11 is a cross-sectional view taken along line XI-XI of FIG. 10, illustrating a state with a cap removed. In a ball screw device 100B according to the second embodiment, deflectors 6 and 7 are provided at the one axial end 24 and the other axial end 25 of the nut body 20. Details will be described below.

As illustrated in FIG. 10, a through-hole 29 extending in the X direction (axial direction) is provided inside the nut body 20. The balls 12 flow inside the through-hole 29 in an X direction. The deflector 6 is provided at the one axial end 24 (end portion on the X1 side) of the nut body 20, and the deflector 7 is provided at the other axial end 25 (end portion on the X2 side). In other words, the deflectors 6 and 7 according to the present embodiment are each an end deflector. Note that as illustrated in FIG. 11, the deflectors 6 and 7 are positioned on the Z1 side and the Y2 side when viewed in an X direction.

As illustrated in FIG. 10, the deflector 6 is provided with a ball return path 61. The ball return path 61 has one end 61a that is positioned on the Z2 side of the deflector 6 to face the outer peripheral raceway groove 11 on the outer periphery of the screw shaft 1. The ball return path 61 has the other end 61b that is positioned on the X2 side of the deflector 6 to communicate with the through-hole 29. The deflector 6 has an end surface 62 on the X2 side that abuts on an end portion 20b on the X1 side of a radially inner portion 20a of the nut body 20. The deflector 6 has a second end surface 63 on the X1 side that abuts on the back surface 30a of the cap 30. The deflector 6 has an inner surface 64 whose radial position is the same as that of an inner surface 20d of the nut body 20. In other words, the inner surface 64 of the deflector 6 is flush with the inner surface 20d of the nut body 20.

As illustrated in FIG. 10, the deflector 7 is provided with a ball return path 71. The ball return path 71 has one end 71a that is positioned on the Z2 side of the deflector 7 to face the outer peripheral raceway groove 11 on the outer periphery of the screw shaft 1. The ball return path 71 has the other end 71b that is positioned on the X1 side of the deflector 7 to communicate with the through-hole 29. The deflector 7 has an end surface 72 on the X1 side that abuts on an end portion 20c on the X2 side of the radially inner portion 20a of the nut body 20. The deflector 7 has a second end surface 73 on the X1 side that abuts on a back surface 31a of the cap 31.

Therefore, as indicated by an arrow in FIG. 10, the balls 12 moving along the outer peripheral raceway groove 11 of the screw shaft 1 are picked up from the ball return path 61 of the deflector 6 and move in the through-hole 29 to the X2 side in the axial direction. Then, the balls 12 pass through the ball return path 71 of the deflector 7 and returns to the outer peripheral raceway groove 11 of the screw shaft 1. Note that when the rotation direction of the screw shaft 1 is reversed, the balls 12 move from the ball return path 71 of the deflector 7 to the X1 side through the through-hole 29, and then returns from the ball return path 61 to the outer peripheral raceway groove 11 of the screw shaft 1.

As described above, the deflectors 6 and 7 are each provided at least at any of the one axial end and the other axial end of the nut body 20, and the caps 30 and 31 abut on the deflectors 6 and 7, respectively.

As described above, the end surface 72 of the deflector 7 on the X1 side abuts on the end portion 20c on the X2 side of the radially inner portion 20a of the nut body 20, and the second end surface 73 of the deflector 7 on the X1 side abuts on the back surface 31a of the cap 31. Therefore, the caps 30 and 31 enables positioning of the deflector 7 in the X direction with higher accuracy.

### [Fourth Embodiment]

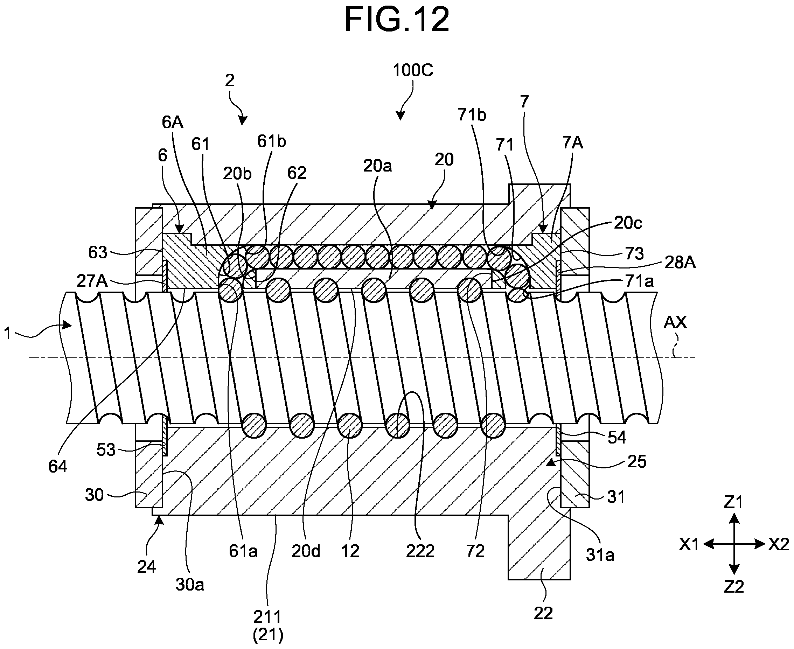

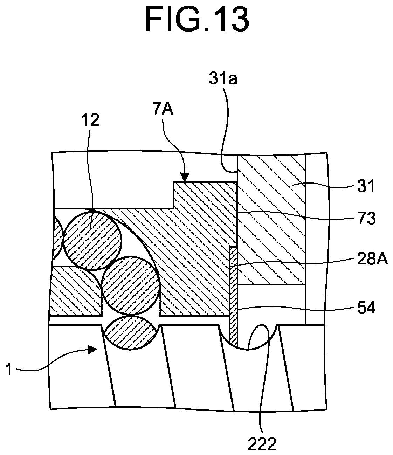

Hereinafter, a fourth embodiment will be described. FIG. 12 is a cross-sectional view of a ball screw device according to the fourth embodiment. FIG. 13 is an enlarged cross-sectional view of a part of FIG. 12. In comparison with the ball screw device 100B according to the third embodiment, a ball screw device 100C according to the fourth embodiment includes the seal member 53 and the seal member 54 each provided on each first end surface 23. Details will be described below.

As illustrated in FIG. 12, the deflector 6 is provided at the one axial end 24 (end portion on the X1 side) of the nut body 20, and the deflector 7 is provided at the other axial end 25 (end portion on the X2 side). The deflector 6 has the second end surface 63 on the X1 side that is provided with a recess 27A. The seal member (second seal member) 53 having an annular shape is accommodated in the recess 27A. The seal member 53 has a thickness equal to or larger than the depth of the recess 27A. The seal member 53 is covered by the cap 30. In other words, the cap 30 covers the seal member 53, and is fastened to the one axial end 24 of the nut body 20 via a bolt which is not illustrated. The seal member 53 and the second end surface 63 abut on the back surface 30a of the cap 30.

As illustrated in FIGS. 12 and 13, a recess 28A is provided in the second end surface 73 of the deflector 7 on the X2 side. The seal member (second seal member) 54 having an annular shape is accommodated in the recess 28A. The seal member 54 has a thickness equal to or larger than the depth of the recess 28A. The seal member 54 is covered by the cap 31. In other words, the cap 31 covers the seal member 54, and is fastened to the other axial end 25 of the nut body 20 via a bolt which is not illustrated. The seal member 54 and the second end surface 73 abut on the back surface 31a of the cap 31.

As described above, the second end surfaces 63 and 73 of deflectors 6A and 7A near the caps 30 and 31 are provided with the recesses 27A and 28A recessed toward the axial center side, and the seal members (second seal members) 53 and 54 abutting on the caps 30 and 31 are fitted in the recesses 27A and 28A.

Therefore, as compared with a configuration provided with a cap attaching only the seal member 53 and a cap attaching only the seal member 54, it is possible for the present embodiment to attach more seal members by using one cap 30 or 31.

### Reference Signs List

1 SCREW SHAFT
11 OUTER PERIPHERAL RACEWAY GROOVE
12 BALL
100, 100A, 100B, 100C BALL SCREW DEVICE
2 NUT
20 NUT BODY
20a RADIALLY INNER PORTION
20b, 20c END PORTION
20d INNER SURFACE
21 CYLINDRICAL PORTION
211 CYLINDRICAL SURFACE
22 FLANGE PORTION
221 MOUNTING HOLE
222 INNER PERIPHERAL RACEWAY GROOVE
23 FIRST END SURFACE
232 TAP HOLE
24 ONE END PORTION IN AXIAL DIRECTION (AXIAL END)
25 OTHER END PORTION IN AXIAL DIRECTION (AXIAL END)
26 RECESSED GROOVE
261 FIRST GROOVE
261a INNER WALL
261b INNER WALL
261c FIRST BOTTOM SURFACE (BOTTOM PORTION)
261d FIRST BOTTOM SURFACE (BOTTOM PORTION)
262 SECOND GROOVE
262a INNER WALL
262b INNER WALL
262c SECOND BOTTOM SURFACE
27, 27A, 28, 28A RECESS
29 THROUGH-HOLE
30 CAP
30a BACK SURFACE
301 CENTER HOLE
302 BOLT HOLE
31 CAP
31a BACK SURFACE
4 COOLANT FLOW PATH
40 COOLANT
401 OUTLET
402 INLET
410 AXIAL FLOW PATH
420 CIRCUMFERENTIAL FLOW PATH
42 FIRST CIRCUMFERENTIAL FLOW PATH (CIRCUMFERENTIAL FLOW PATH)
421 FLOW PATH END
422 FLOW PATH END
43 FIRST AXIAL FLOW PATH (AXIAL FLOW PATH)
431 FLOW PATH END
432 FLOW PATH END
44 SECOND CIRCUMFERENTIAL FLOW PATH (CIRCUMFERENTIAL FLOW PATH)
441 FLOW PATH END
442 FLOW PATH END
45 SECOND AXIAL FLOW PATH (AXIAL FLOW PATH)
451 FLOW PATH END
452 FLOW PATH END
46 THIRD CIRCUMFERENTIAL FLOW PATH (CIRCUMFERENTIAL FLOW PATH)
461 FLOW PATH END
462 FLOW PATH END
47 THIRD AXIAL FLOW PATH (AXIAL FLOW PATH)
471 FLOW PATH END
472 FLOW PATH END
48 FOURTH CIRCUMFERENTIAL FLOW PATH (CIRCUMFERENTIAL FLOW PATH)
481 FLOW PATH END
482 FLOW PATH END
49 FOURTH AXIAL FLOW PATH (AXIAL FLOW PATH)
491 FLOW PATH END
492 FLOW PATH END
5 SEAL MEMBER
50 O-RING
51 SEAL MEMBER (FIRST SEAL MEMBER)
52 SEAL MEMBER (FIRST SEAL MEMBER)
53, 54 SEAL MEMBER (SECOND SEAL MEMBER)
6, 6A, 7, 7A DEFLECTOR
61, 71 BALL RETURN PATH
61a ONE END
61b OTHER END
62, 72 END SURFACE
63, 73 SECOND END SURFACE
64 INNER SURFACE
AX CENTRAL AXIS
BL BOLT

## Claims

1. A ball screw device comprising:
a nut that is provided with an inner peripheral raceway groove on an inner peripheral surface and includes a plurality of axial flow paths through which a coolant flows axially;
a screw shaft that passes through the nut and is provided with an outer peripheral raceway groove on an outer peripheral surface; and
a plurality of balls that is arranged between the inner peripheral raceway groove and the outer peripheral raceway groove, wherein
the nut includes:
a nut body that is provided with a plurality of recessed grooves on a first end surface arranged at an axial end portion of at least one of one axial end and the other axial end of a central axis;
a plurality of first seal members that is fitted in respective ones of the plurality of recessed grooves; and
one cap that covers the plurality of recessed grooves on the first end surface and is attached to the axial end portion, and closes a circumferential flow path in which the coolant circumferentially flows in a recessed groove communicating between end portions of two of the plurality of axial flow paths.

2. The ball screw device according to claim 1, wherein
each of the recessed grooves includes:
a first groove that is a recess recessed from the first end surface toward an axial center side, and has an outer shape of the recess extending in a circumferential direction of the nut when viewed in an axial direction of the nut, and in which the first seal member is fitted; and
a second groove that is provided inside the first groove as viewed in the axial direction of the nut, is recessed from a bottom portion of the first groove toward the axial center side, and from which the end portions of the two axial flow paths are exposed to the inside.

3. The ball screw device according to claim 1 or 2, wherein
a deflector is provided at the axial end portion of at least one of the one axial end and the other axial end of the nut body, and
the cap abuts on the deflector.

4. The ball screw device according to claim 3, wherein
a second end surface of the deflector near the cap is provided with a recess that is recessed toward an axial center side, and
a second seal member that abuts on the cap is fitted in the recess.
